# EUROPÄISCHE PATENTSCHRIFT

(11) **EP 0 570 872 B1**
(45) Veröffentlichungstag und Bekanntmachung des Hinweises auf die Patenterteilung: **16.12.1998**
(21) Anmeldenummer: 93107940.4
(22) Anmeldetag: 15.05.1993
(51) Int. Cl.: C02F 1/42, A47L 15/42

(54) **Wasserenthärter für Haushalts-Geschirrspülmaschinen**
Water softening device for domestic dishwashing machines
Adoucisseur pour machines de ménage à laver la vaisselle

(30) Priorität: 16.05.1992 DE 4216292
(43) Veröffentlichungstag der Anmeldung: 24.11.1993
(73) Patentinhaber: AWECO Kunststofftechnik Gerätebau GmbH & Co. KG, 88099 Neukirch (DE)
(72) Erfinder: Schrott, Harald, W-8990 Lindau (DE); Wisskirchen, Michael, W-7995 Neukirch (DE); Lanz, August, W-7992 Tettnang 1 (DE)
(74) Vertreter: Patentanwälte Eisele, Otten & Roth

(56) Entgegenhaltungen:
- EP-A- 0 000 942
- EP-A- 0 205 787
- EP-A- 0 205 788
- DE-A- 2 630 164
- DE-C- 2 947 484

## Beschreibung

Die Erfindung betrifft einen Wasserenthärter für Haushalts-Geschirrspülmaschinen mit einem Tauscherbehälter, der eine körnige Ionenaustauschermasse enthält, einem Salzbehälter und einem oberhalb des Salzbehälters angeordneten Vorratsbehälter, der zum Regenerieren eine Wassermenge in den Salzbehälter abgibt, wobei Sole aus dem Salzbehälter in den Tauscherbehälter übertritt.

Schon aus der deutschen Auslegeschrift 25 01 269 ist dieses Regenerierprinzip grundsätzlich bekannt. Der oben offene Vorratsbehälter hat einen Überlauf und wird vom Schälwasser einer freien Luftstrecke ständig auf gleichem Niveau gefüllt gehalten. Die Wasserverlagerung vollzieht sich, gesteuert durch ein Magnetventil, durch hydrostatischen Druckausgleich.

Um den Salzverbrauch an die örtliche Wasserhärte anzupassen und dadurch bei weicherem Leitungswasser Salz zu sparen, ist es beispielsweise aus der deutschen Offenlegungsschrift 32 09 563 bekannt, den Vorratsbehälter in einzelne Kammern aufzuteilen und mittels eines nach der örtlichen Wasserhärte einstellbaren Auswahlventils jeweils nur einen, zwei oder alle Teilbehälter einzubeziehen, d. h. zum Regenerieren dem Tauscherbehälter eine kleinere oder größere Menge gesättigter Sole zuzuführen.

Der Salzverbrauch bei Haushalts-Geschirrspülmaschinen ist aber auch ganz allgemein betrachtet zu hoch. In systematischen Untersuchungen ist festgestellt worden, daß durch wesentliche Erhöhung des Regeneriervolumens und entsprechende Herabsetzung der Solekonzentration der Salzverbrauch sich bis fast auf einen theoretischen Minimalwert von 20,85 mg NaCl/l und pro Grad deutscher Härte reduzieren läßt. Demgegenüber liegen die heute gebräuchlichen Enthärtungssysteme bei solchen Maschinen im allgemeinen zwischen 80 und 100 mg NaCl/l°.

In Auswertung dieser Erkenntnis sind Wasserenthärter bekannt geworden, die mit einem mehr oder weniger konstanten Mischungsverhältnis von Sole zu Wasser arbeiten und die Anpassung an die Rohwasserhärte durch Verändern des Volumens der Regenerierflüssigkeit herbeiführen. Das wirft das Problem auf, daß bei großer Rohwasserhärte ein entsprechend hoher Bedarf an Regenerierflüssigkeit besteht, die in Haushaltsgeschirrspülern aus Platzgründen nicht bevorratet werden kann.

Aus der deutschen Offenlegungsschrift 26 30 164 ist es bekannt, durch Verdünnung der Sole in einem variablen Verhältnis die Anpassung an die Rohwasserhärte zu bewerkstelligen. Das variable Mischungsverhältnis wird durch Stellventile, d. h. durch Veränderung von Strömungswiderständen, bestimmt. Diese bekannte Anordnung führte jedoch aus verschiedenen Gründen nicht zum Erfolg. Die Schwierigkeit besteht einmal darin, bei dem verhältnismäßig kleinen Tauschervolumen solcher Maschinen mit preiswerten Mitteln die erforderlichen kleinen Wassermengen genau genug abzumessen. Zeitgesteuerte Magnetventile sind einerseits aufwendig und berücksichtigen nicht die unterschiedlichen und schwankenden Drücke der Wasserversorgungsnetze. Vor allem aber ergeben sich Schwierigkeiten aufgrund verschiedener schwer zu erfassender Einflüsse auf die Fließgeschwindigkeiten im System. Das wichtigste Beispiel hierfür ist die Abhängigkeit des Durchflußwiderstandes des Salzvorratsgefäßes von dessen Füllstand. Dies führt dazu, daß es bisher nicht gelungen ist, ein einmal eingestelltes Mischungsverhältnis von Sole zu Wasser auf Dauer konstantzuhalten.

Es wurde auch festgestellt, daß wenn in Anpassung an die örtliche Wasserhärte nur verhältnismäßig kleine gesättigte Solemengen in den Tauscherbehälter eingebracht werden, diese konzentrierte Sole sich nur ungenügend in dem Tauscherbehälter verteilt. Die Verteilung, die zugleich eine Verdünnung mit dem dort vorhandenen Wasser ist, dauert verhältnismäßig lange, so daß die eigentliche Regenerierung nur langsam in Gang kommt. Hierzu wird als Beispiel ein bekannter und verbreiteter Ionentauscher erwähnt, der einen Vorraum aufweist, in den die Zuleitungen münden und der von dem darüberliegenden Tauschergranulat durch ein Sieb getrennt ist. Dieser Vorraum allein ist größer als das einzubringende Volumen an gesättigter Sole, wenn der Tauscher mit kleinen Regeneriermengen, d. h. an einem Standort mit nur schwach kalkhaltigem Wasser, betrieben wird. Jedenfalls gibt es in der Ionenaustauschermasse Stellen, an denen der Ionenaustausch nicht mit der Effektivität stattfindet, die wünschenswert wäre. Alle diese Einflüsse wurden bisher durch eine überschüssige Solezugabe als Reserve, insbesondere bei mittleren Leitungswasser-Härtewerten, ausgeglichen.

Der Erfindung liegt die Aufgabe zugrunde, den Salzverbrauch weiter zu verringern.

Ausgehend von einem Wasserenthärter der einleitend bezeichneten Art wird diese Aufgabe erfindungsgemäß dadurch gelöst, daß die bevorratete gesamte Wassermenge in wählbarem Verhältnis in zwei Teilmengen aufteilbar ist und daß die eine Teilmenge über den Salzbehälter und die andere unmittelbar in den Tauscherbehälter gelangt.

Es wird also ein Soleverschnitt gebildet, was an sich bekannt ist. Der wesentliche Gedanke der Erfindung besteht demgegenüber darin, daß die Menge des Gemischs von Wasser und Sole ganz genau festlegbar und an das Flüssigkeits-Fassungsvermögen des Tauschers anpaßbar ist. Damit ist es möglich, den Enthärter je nach Beladungszustand (abhängig von der örtlichen Wasserhärte) mit der optimalen Solekonzentration und Solemenge zu regenerieren. Der Gesamtsalzaufwand wird minimiert, weil die Soledichte, die z. B. zwischen 1,02 und 1,2 g/cm³ variiert, genau reproduzierbar einstellbar ist. Auf Sicherheitsüberschüsse an Sole kann verzichtet werden.

So gelingt es mit der Erfindung, das Volumen und die einmal eingestellte Konzentration der Regenerierflüssigkeit über die ganze Lebensdauer der Maschine konstantzuhalten. Die bevorratete Wassermenge kann auf die Bauart und das Fassungsvermögen des Tauscherbehälters sowie auf die Art der Tauschermasse genau abgestimmt werden. Somit gelangt sofort nach dem Öffnen des Regenerierventils Sole von optimal bemessener Konzentration an alle Stellen innerhalb der Tauschermasse, ohne daß unnötig Sole ausgespült wird. Dadurch sind auch die Streuverluste im Leitungssystem minimiert. Das führt gerade in den Gebieten mit mittleren Wasserhärten, denen etwa 80 % der Haushalte angehören, zu einer nennenswerten Salzersparnis.

Die Mengenaufteilung innerhalb des Vorratsbehälters kann auf verschiedene Weise verwirklicht werden. Eine Möglichkeit besteht darin, daß der Vorratsbehälter aus zwei Kammern mit eigenen Auslässen besteht, die durch eine bewegliche Wand voneinander getrennt sind. Das kann eine zwischen zwei parallelen Wänden verschiebbare Trennwand sein oder eine Kammertrennwand in Form eines Gummibalgens, einer Rollmembran oder dgl.

Nach der bevorzugten Ausführung besteht der Vorratsbehälter aus einer Mehrzahl einzelner Kammern, insbesondere gleich großer Kammern, die durch ein Leitventil mit zwei Auslässen wahlweise je einem dieser Auslässe zuteilbar sind. Insbesondere wird man das Leitventil als Drehventil ausbilden. Es kann in den Vorratsbehälter integriert sein und sollte überdies so angeordnet sein, daß es vom Innenraum des Bottichs her zugänglich ist.

Der Grundgedanke der Erfindung, mit zwei Wasser-Teilmengen zu operieren, ist auch dadurch erreichbar, daß zwei Vorratsbehälter mit je einem Auslaß vorgesehen sind, wobei ein Auslaß über den Salzbehälter und der andere unmittelbar mit dem Tauscherbehälter verbunden ist, und daß aus den Vorratsbehältern unterschiedliche Wasser-Teilmengen abgerufen werden können. Diese müssen jedoch in ihrer Summe eine bestimmte unveränderliche Wassermenge ergeben. Im Prinzip könnten also zwei z. B. aus DE-A 32 09 563 bekannte Vorratsbehälter bei zwangsweise gekoppelter Betätigung ihrer Auswahlventile zur Bildung der Teilmengen herangezogen werden.

Es wird vorgeschlagen, daß eine Mischvorrichtung vorgesehen ist, in welcher die der einen Wasser-Teilmenge entsprechenden Solemenge und die andere Wasser-Teilmenge zusammengeführt und als Gemisch in den Tauscherbehälter eingeleitet werden. In ihrer einfachsten Form ist die Mischvorrichtung ein Y-Rohr. Die Mischvorrichtung wird vorzugsweise in den Salzbehälter integriert. Eine Mischvorrichtung ist vor allem auch deshalb wichtig, damit ein einziges Magnetventil, welches den Mischvorgang steuert, in Strömungsrichtung nach der Mischvorrichtung angeordnet werden kann.

Anstelle des einen Magnetventils können zur Steuerung des Mischvorganges auch zwei einfache Magnetventile oder ein 4/2-Wege-Magnetventil in die beiden von dem Vorratsbehälter oder den Vorratsbehältern kommenden Leitungen, d. h. vor dem Salzbehälter, eingeschaltet werden. In diesem Fall wird man allerdings zwischen der Mischvorrichtung und dem Tauscherbehälter ein Rückschlagventil vorsehen müssen.

Da die Teilmengen je nach Einstellung unterschiedlich sind, kann es erforderlich werden, durch Beeinflussung des Strömungswiderstandes der Leitungskanäle, z. B. mittels des Leitventils, zu erreichen, daß beide Teilmengen in zeitlicher Übereinstimmung ausfließen. Andernfalls wird kein gleichmäßiges Gemisch erzeugt. Das Ziel der Erfindung läßt sich jedoch auch ohne Gemischbildung außerhalb des Tauscherbehälters erreichen, wenn der Strömungswiderstand des Fließweges der unmittelbar in den Tauscherbehälter gelangenden Wasser-Teilmenge so groß bemessen ist, daß diese Teilmenge im wesentlichen nach der Solemenge in den Tauscherbehälter einfließt. Dieser Vorschlag bewirkt, daß zunächst ein festes Quantum konzentrierter Sole einfließt und dieses anschließend von Reinwasser oder jedenfalls stark verdünnter Sole weitergeschoben wird. Auch in diesem Fall ist gewährleistet, daß jedenfalls die Gesamtmenge der einfließenden Flüssigkeit auf das Flüssigkeitsvolumen des Tauscherbehälters abgestimmt ist.

Um diese Anpassung an das Volumen des verwendeten Tauscherbehälters durchführen zu können, wird schließlich vorgeschlagen, daß die gesamte bevorratete Wassermenge einstellbar ist. Bei zwei Vorratsbehältern mit einstellbaren Abflußmengen ist dies ohnehin möglich.

Was die konstruktive Ausbildung des oben erwähnten, in einen mehrkammerigen Vorratsbehälter integrierten Leitventils anbelangt, ist zunächst zu beachten, daß es sich um einen ausgesprochenen Massenartikel handelt. Das bedeutet, daß das Leitventil einfach zu montieren sein muß. Es wird deshalb vorgeschlagen, daß eine Lochscheibe mit den einzelnen Kammern und Kanälen zugeordneten, kreisförmig angeordneten Löchern vorgesehen ist und daß an der Lochscheibe ein koaxial gelagertes Drehteil anliegt, das an seiner der Lochscheibe zugewandten Seite zwei bogenförmige Vertiefungen hat. Diese Vertiefungen legen sich über die Löcher und verbinden diese je nach der Winkelstellung des Drehteils in wechselnder Gruppierung miteinander. Um die vertieften Verbindungsräume gegeneinander und gegen die Lochscheibe abzudichten, sollten sie von je einem Dichtring umrandet sein.

Da der die Kammern und das Leitventil enthaltende Baukörper sich gewöhnlich in der Seitenwand der Geschirrspülmaschine befindet, ist eine flache Bauform sehr wichtig. Im Hinblick darauf wird vorgeschlagen, daß das Drehteil mit einem axialen Vorsprung die Lochscheibe durchsetzt und eine ihn umgebende wendelförmige Druckfeder zwischen der Lochscheibe und einer Verbreiterung am Ende des Vorsprungs eingespannt ist. Mit Hilfe dieses die Feder haltenden Vorsprungs kann die Gesamtdicke des Bauteils für den Einbau einer kräftigen Feder genutzt werden. Der Vorsprung besteht zweckmäßigerweise aus einzelnen Fingern, die so flexibel sind, daß sie beim Einstecken der verbreiterten Enden in die zentrale Öffnung der Lochscheibe zusammenfedern können.

Ausführungsbeispiele der Erfindung werden nachfolgend anhand der Zeichnung erläutert. Im einzelnen zeigt
- Fig. 1: ein erstes Schema eines Wasserenthärters für eine Geschirrspülmaschine,
- Fig. 2: ein schematisches Schnittbild eines ersten Leitventils für einen vielkammerigen Wasservorratsbehälter.
- Fig. 3: ein zweites Schema eines Wasserenthärters mit einem drehbaren Leitventil für eine Geschirrspülmaschine,
- Fig. 4: einen Axialschnitt des Leitventils gemäß Fig. 3 in größerem Maßstab und nach der Schnittlinie IV-IV in Fig. 5,
- Fig. 5: die Innenansicht V-V des rückseitigen Gehäuseteils des Leitventils mit eingelegter Lochscheibe,
- Fig. 6: die Innenansicht VI-VI des nach unten aufgeklappten vorderen Gehäuseteils,
- Fig. 7: die Ansicht der gemäß Fig. 5 unter der Lochscheibe befindlichen Scheibe des Drehteils und
- Fig. 8: ein Teilschnitt VIII-VIII des rückseitigen Gehäuseteils zur Darstellung des Rastmechanismus.

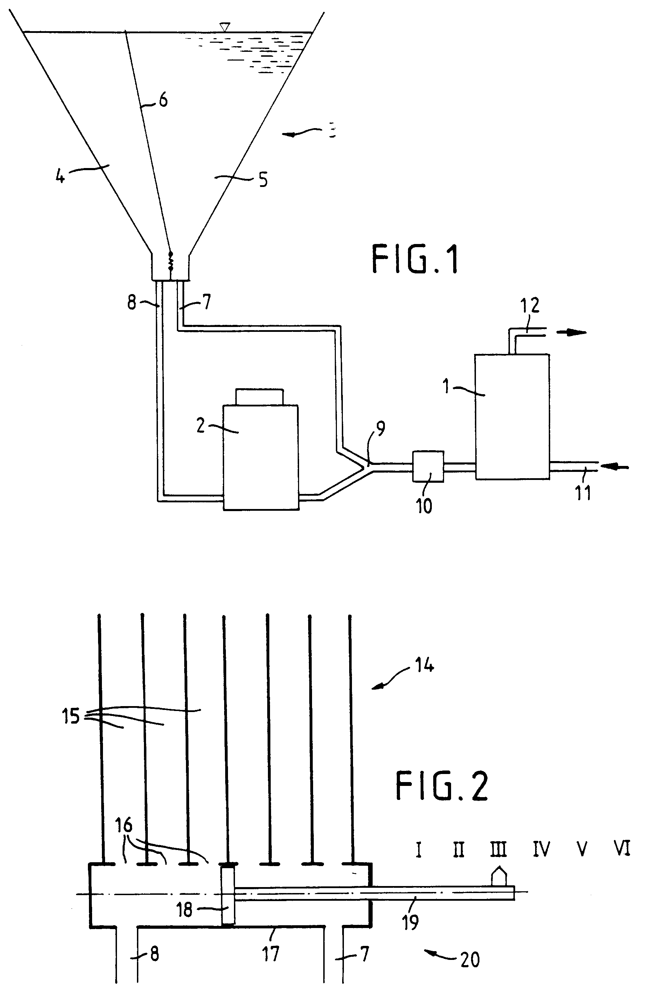

Der Wasserenthärter nach Fig. 1 umfaßt einen Tauscherbehälter 1 und einen mit Salz und gesättigter Sole gefüllten Salzbehälter 2. Oberhalb des Salzbehälters ist ein oben offener Vorratsbehälter 3 angeordnet, dessen beide Kammern 4 und 5 mit Wasser, beispielsweise dem Schälwasser einer freien Luftstrecke, voll gefüllt werden. Der V-förmige Vorratsbehälter 3 hat vorne und hinten ebene und zueinander parallele Wände und schräge Seitenwände. Eine Trennwand 6, die unten flexibel angelenkt und seitlich abgedichtet ist, läßt sich durch Schwenken nach links und rechts in jede beliebige Zwischenstellung einstellen, wodurch das Volumen des Vorratsbehälters 3 in dem gewünschten Verhältnis auf die Kammern 4 und 5 aufteilbar ist. Jede der Kammern hat einen eigenen Auslaß, an den sich ein Kanal 7 bzw. 8 anschließt. Der Kanal 7 ist mit einer Zusammenflußstelle 9 verbunden, während der Kanal 8 zum Salzbehälter 2 führt und von dessen Ausgang ebenfalls zur Zusammenflußstelle 9. Von hier aus werden die Ströme gemeinsam über ein Magnetventil 10, das sogenannte Regenerierventil, in den Tauscherbehälter 1 eingeführt. Der Tauscherbehälter hat ferner einen Hartwassereinlaß 11 und einen Weichwasserauslaß 12.

Zum Regenerieren wird das Magnetventil 10 geöffnet, so daß sich die beiden Kammern 4 und 5 entleeren können. Der Inhalt der Kammer 4 tritt in gleicher Menge am Auslaß des Salzbehälters 2 als konzentrierte Sole in Erscheinung und mischt sich an der Zusammenflußstelle 9 mit dem Inhalt der Kammer 5. Die unabhängig von der Stellung der Trennwand 6 stets gleiche Menge des Sole-Wasser-Gemischs ist so bemessen, daß im Tauscherbehälter 1 das dort vorhandene Wasser über den Auslaß 12 verdrängt und jeder Partikel der Tauschermasse mit Sole richtig bestimmter Salzkonzentration umgeben wird.

Der in Fig. 2 gezeigte Vorratsbehälter 14 besteht aus sechs Kammern 15 gleichen Inhalts. Jede dieser Kammern mündet über eine Bohrung 16 in ein Querrohr 17, das an der diametral gegenüberliegenden Seite an jedem Ende einen Auslaß mit anschließendem Kanal hat. Die Kanäle sind in Anlehnung an Fig. 1 mit den gleichen Bezugszeichen 7 und 8 bezeichnet. Das an beiden Stirnenden geschlossene Querrohr 17 enthält einen Stellkolben 18, der mittels einer Kolbenstange 19 betätigbar ist. Das Ende der Kolbenstange 19 dient als Marke einer Einstellskala I-VI. Das Querrohr und sein Stellkolben stellen insgesamt ein durch eine Hubbewegung einstellbares Leitventil 20 dar.

Mit Hilfe des Leitventils kann das Volumen des Vorratsbehälters 14 voll in den Kanal 8 geleitet werden (Stellung VI) oder in den Verhältnissen 1 : 5, 2 : 4, 3 : 3, 4 : 2 und 5 : 1 auf die beiden Kanäle 7 und 8 verteilt werden, so daß - in diesem Fall in Stufen - dasselbe erreicht wird wie mit der Trennwand 6 bei dem zuerst beschriebenen Beispiel.

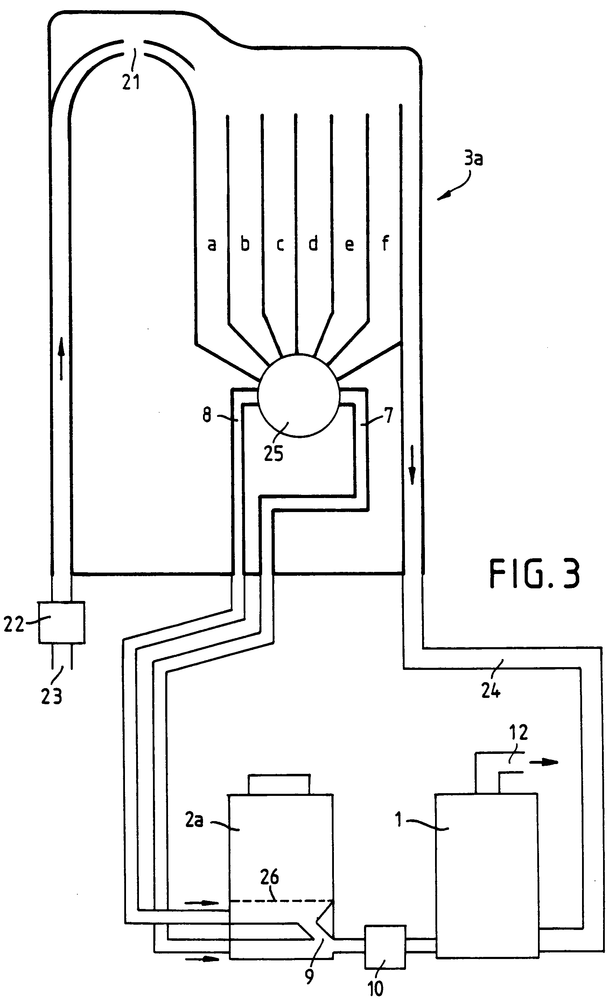

Auch der Wasserenthärter nach Fig. 3 umfaßt einen Tauscherbehälter 1 mit Auslaß 12, einen Salzbehälter 2a und ein, wie bekannt, zwischen beiden eingeschaltetes Magnetventil 10. Der dargestellte Vorratsbehälter 3a enthält außer sechs Vorratskammern a bis f eine freie Luftstrecke 21 im Zuge der über ein Magnetventil 22 gesteuerten Hartwasser-Zuleitung 23. Diese führt nach der Luftstrecke 21 über die Kammern a bis f hinweg, die dadurch aufgefüllt werden, und verläßt das Vorratskammer-Bauteil über eine Verbindungsleitung 24, die zum Tauscherbehälter 1 führt. Die Kammern a bis f können mittels eines drehbaren Leitventils 25 auf die auch hier mit 7 und 8 bezeichneten Kanäle aufgeteilt werden. Der Kanal 7 führt unmittelbar in den Tauscherbehälter 1, der Kanal 8 über den Salzbehälter 2a. Die Zusammenflußstelle 9 ist in diesem Beispiel unterhalb des Salzsiebes 26 in den Salzbehälter 2a integriert.

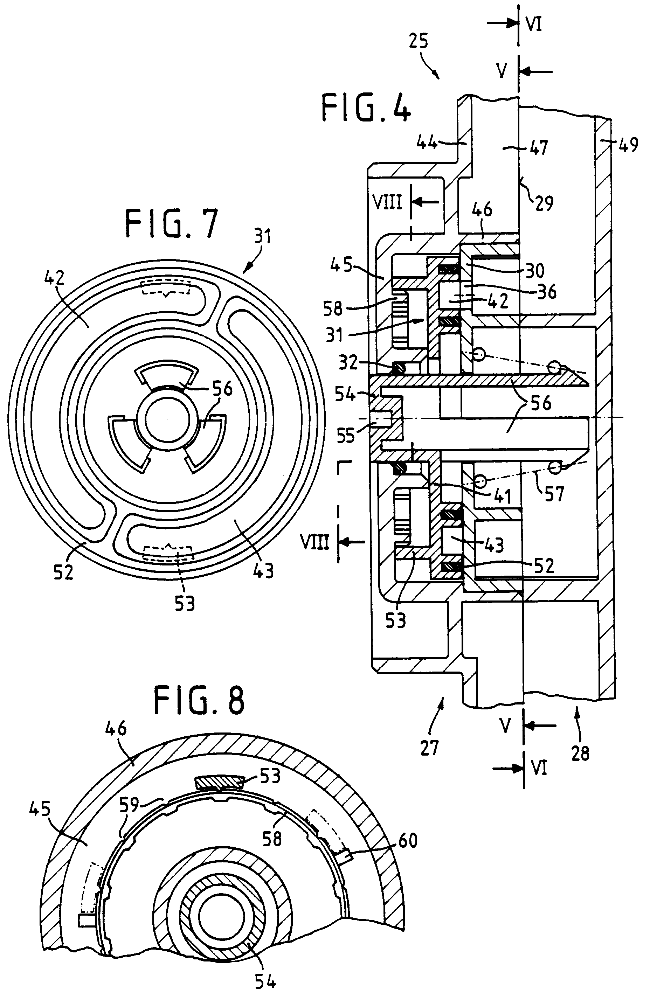

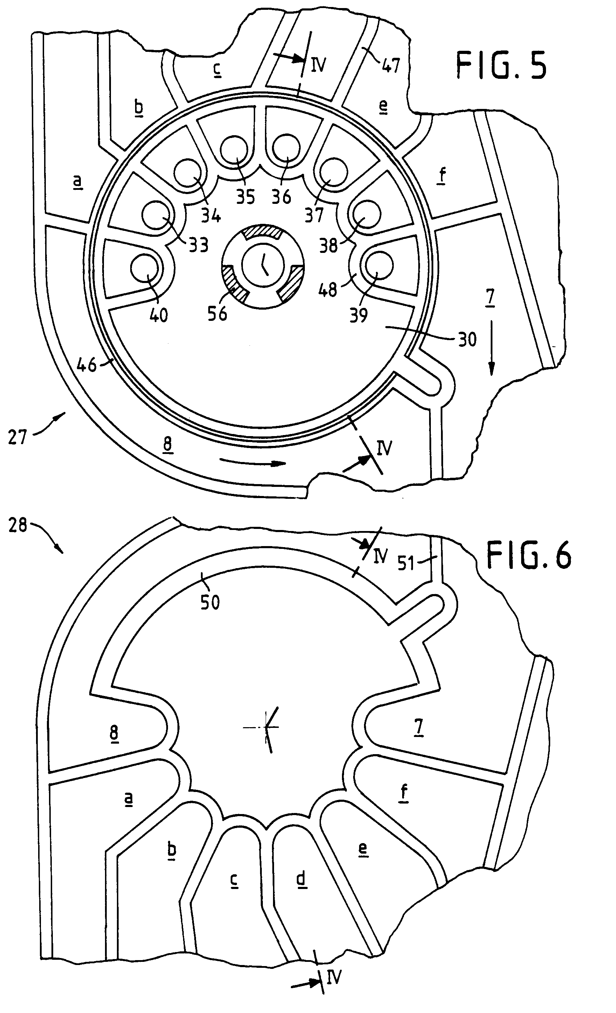

Die Figuren 4 bis 8 zeigen konstruktive Einzelheiten des Leitventils 25. Der Vorratsbehälter 3a besteht gemäß Fig. 4 aus einem rückseitigen Gehäuseteil 27 und einem vorderen Gehäuseteil 28, die in einer Schweißebene 29 durch Spiegelschweißung miteinander verbunden sind. In den rückseitigen Gehäuseteil 27 ist eine undrehbare Lochscheibe 30 eingesetzt. Sie wirkt mit einem Drehteil 31 zusammen, dessen Innenansicht Fig. 7 zeigt und das vorsorglich mittels eines O-Rings 23 zusätzlich abgedichtet ist.

Die Figuren 4 bis 6 sind so zu verstehen, daß die einzelnen Kammern a bis f unten in ebenso bezeichnete Kanalräume übergehen, die auf der rechten Seite (Fig. 4) der Lochscheibe 30 in deren Löcher 33 bis 38 münden. Andererseits stehen die Auslaßkanäle 7 und 8 mit den Löchern 39 bzw. 40 der Lochscheibe 30 in Verbindung. Eine scheibenförmige Partie 41 des Drehteils 31 hat an der der Lochscheibe 29 zugewandten Seite zwei bogenförmige Vertiefungen 42 und 43, welche je nach der Winkelstellung dieses Drehteils die Bohrung 40 des Kanals 8 mit einer oder mehreren der Kammern a bis f verbinden, wobei dann jeweils die übrigen Kammern mit dem Kanal 7 verbunden sind.

Das rückseitige Gehäuseteil 27 bildet einen aus der Rückwand 44 des Vorratsbehälters 3a nach hinten vorspringenden Topf, dessen Boden mit 45 bezeichnet ist. Seine Wandung 46 bildet etwa in Höhe der Rückwand 44 an der Innenseite eine Schulter und setzt sich dann mit verringerter Dicke bis zur Schweißebene 29 fort. Außen schließen sich an die Wand 46 radial verlaufende Trennwände 47 an, welche die einzelnen Kammern a bis f und die Auslaufkanäle 7 und 8 umschließen. Die Lochscheibe 30 hat ein aus einer äußeren Ringwand und zusammenhängenden Wandbögen 48 bestehendes Wandsystem, das um die Löcher 33 bis 40 herum Zellen bildet, wobei die radialen Wandabschnitte sich in den Trennwänden 47 fortsetzen. Dieses gesamte Wandsystem hat eine durch die Schweißebene 29 vorgegebene gleichmäßige Höhe.

Klappt man den vorderen Gehäuseteil 28, der die Vorderwand 49 des Vorratsbehälters 3a bildet, nach unten, wie in Fig. 6 dargestellt, so zeigt sich ein zu dem beschriebenen Wandsystem im wesentlichen spiegelbildliches Wandsystem, wobei allerdings im Bereich der den Wandbögen 48 entsprechenden kleinen Bögen die Ringwand der Lochscheibe 30 und die Topfwand 46 fehlen, so daß die Kammern a bis f und die Auslaßkanäle 7 und 8 die den Zellen der Fig. 5 entsprechenden Bereiche einschließen. Nur zwischen den beiderseits letzten Wandbögen erstreckt sich über einen Bogenwinkel von etwa 150° eine der Wand 46 folgende Kreisbogenwand 50, welche die Kanäle 7 und 8 voneinander trennt und an der eine weitere Trennwand 51 ansitzt.

Das Drehteil 31 hat, wie erwähnt, eine scheibenförmige Partie 41, an deren der Lochscheibe 30 zugewandter Seite Wände vorgesehen sind, die kreisbogenförmige vertiefte Räume 42 und 43 umgrenzen. Die Wände haben ein Nutsystem, in das ein spezieller Dichtkörper 52 eingelegt ist. Er besteht aus zwei konzentrischen Ringen flachen Querschnitts, die an zwei einander diametral gegenüberliegenden Stellen durch Querstege miteinander verbunden sind. An der gegenüberliegenden Seite der scheibenförmigen Partie 41 sind zwei einander ebenfalls diametral gegenüberliegende schmale Rastvorsprünge 53 vorgesehen. Das Drehteil hat ferner einen in dem Boden 45 gelagerten zylindrischen Lagervorsprung 54, der an seinem Boden einen Betätigungsschlitz 55 zum Einstecken einer Münze oder eines Schraubenziehers aufweist. Nach der anderen Seite, zur Vorderwand 49 hin vorspringend, stehen von der scheibenförmigen Partie 41 drei zentrisch symmetrisch angeordnete Federfinger 56 ab, an deren Spitzen jeweils eine Schrägfläche und eine Schulter ausgebildet ist. Zwischen den Schultern und der Lochscheibe 30 ist eine Kegel-Druckfeder 57 eingespannt, welche das Drehteil 31 mit seinem Dichtkörper 52 an die Lochscheibe 30 heranzieht.

An der Innenseite des Bodens 45 ist eine Ringwand 58 angeordnet, die an ihrem Außenumfang Rastkerben 59 aufweist, welche mit an den Rastvorsprüngen 53 angebrachten Schneiden zusammenwirken. Dadurch ist das Drehteil 31 in sechs verschiedenen Winkelstellungen verrastbar. In diesen Stellungen verbindet die Vertiefung 42 das Loch 40 mit dem Loch 33, mit den Löchern 33 und 34 usw. und in der letzten Stellung mit den sechs Löchern 33 bis 38. Gleichzeitig ist dann jeweils durch die Vertiefung 43 das Loch 39 mit den Löchern 34 bis 38, 35 bis 38 usw. und zuletzt nur mit dem Loch 38 verbunden. Die in Fig. 8 strichpunktiert angedeuteten Endstellungen eines Rastvorsprungs 53 sind durch Anschläge 60 festgelegt.

Die Montage verläuft wie folgt. Das mit dem Dichtkörper 52 versehene Drehteil 31 wird mit den Fingern 56 durch die zentrale Öffnung der Lochscheibe 30 gesteckt, wobei sich die Finger infolge der Schrägflächen an ihren Spitzen elastisch nachgebend nach innen biegen. Sodann wird die Kegelfeder 57 aufgesetzt, wobei ebenfalls die Schrägflächen dazu dienen, die letzte Windung der Feder hinter die Schultern zu bringen. Die so vorbereitete Lochscheibe/Drehteil-Kombination erhält noch den O-Ring 32 auf den Lagervorsprung 54 aufgesteckt und wird dann in das rückseitige Gehäuseteil 57 eingesetzt, wobei die Lochscheibe auf die Schulter der Wand 46 zu liegen kommt. Die Rastvorsprünge 53 greifen an der Ringwand 58 an.

Werden sodann die beide Gehäuseteile 27 und 28 durch Spiegelschweißung miteinander verbunden, so ergeben sich geschlossene Kammer- und Kanalräume, die infolge der fehlenden Ringwandabschnitte des Gehäuseteils 28 mit den Zellen des Gehäuseteils 27 und den Löchern in Verbindung stehen.
- 1: Tauscherbehälter
- 2: Salzbehälter
- 2a: Salzbehälter
- 3: Vorratsbehälter
- 3a: Vorratsbehälter
- 4: Kammer
- 5: Kammer
- 6: Trennwand
- 7: Kanal
- 8: Kanal
- 9: Zusammenflußstelle
- 10: Magnetventil
- 11: Hartwassereinlaß
- 12: Weichwasserauslaß
- 14: Vorratsbehälter
- 15: Kammer
- 16: Bohrung
- 17: Querrohr
- 18: Stellkolben
- 19: Kolbenstange
- 20: Leitventil
- 21: Luftstrecke
- 22: Magnetventil
- 23: Hartwasser-Zuleitung
- 24: Verbindungsleitung
- 25: Leitventil
- 26: Salzsieb
- 27: Gehäuseteil
- 28: Gehäuseteil (vorn)
- 29: Schweißebene
- 30: Lochscheibe
- 31: Drehteil
- 32: O-Ring
- 33: Loch
- 34: Loch
- 35: Loch
- 36: Loch
- 37: Loch
- 38: Loch
- 39: Loch
- 40: Loch
- 41: scheibenförmige Partie
- 42: Vertiefung
- 43: Vertiefung
- 44: Rückwand
- 45: Boden
- 46: Wand
- 47: Trennwand
- 48: Wandbögen
- 49: Vorderwand
- 50: Kreisbogenwand
- 51: Trennwand
- 52: Dichtkörper
- 53: Rastvorsprung
- 54: Lagervorsprung
- 55: Betätigungsschlitz
- 56: Federfinger
- 57: Kegel-Druckfeder
- 58: Ringwand
- 59: Rastkerben
- 60: Anschlag
- a: Kammer
- b: Kammer
- c: Kammer
- d: Kammer
- e: Kammer
- f: Kammer

## Patentansprüche

1. Wasserenthärter für Haushalts-Geschirrspülmaschinen mit einem Tauscherbehälter (1), der eine körnige Ionenaustauschermasse enthält, einem Salzbehälter (2) und einem oberhalb des Salzbehälters angeordneten Vorratsbehälter (3), der zum Regenerieren eine Wassermenge in den Salzbehälter abgibt, wobei Sole aus dem Salzbehälter (2) in den Tauscherbehälter (1) übertritt, dadurch gekennzeichnet, daß die gesamte bevorratete Wassermenge in wählbarem Verhältnis in zwei Teilmengen aufteilbar ist und daß die eine Teilmenge über den Salzbehälter (2) und die andere unmittelbar in den Tauscherbehälter (1) gelangt.

2. Wasserenthärter nach Anspruch 1, dadurch gekennzeichnet, daß der Vorratsbehälter (14, 3a) aus einer Mehrzahl einzelner Kammern (15; a bis f) besteht, die durch ein Leitventil (20; 25) mit zwei Auslässen, die über getrennte Kanäle (7, 8) mit dem Tauscherbehälter (1) bzw. dem Salzbehälter (2) verbunden sind, wahlweise je einem dieser Auslässe zuteilbar sind.

3. Wasserenthärter nach Anspruch 1, dadurch gekennzeichnet, daß der Vorratsbehälter (3) aus zwei Kammern (4, 5) mit eigenen Auslässen besteht, die durch eine bewegliche Wand (6) voneinander getrennt sind.

4. Wasserenthärter für Haushalts-Geschirrspülmaschinen mit einem Tauscherbehälter, der eine körnige Ionenaustauschermasse enthält, einem Salzbehälter und einer oberhalb des Salzbehälters angeordneten Vorratseinrichtung, die zum Regenerieren eine Wassermenge in den Salzbehälter abgibt, wobei Sole aus dem Salzbehälter in den Tauscherbehälter übertritt, dadurch gekennzeichnet, daß zwei Vorratsbehälter mit je einem Auslaß vorgesehen sind, daß ein Auslaß über den Salzbehälter und der andere unmittelbar mit dem Tauscherbehälter verbunden ist, und daß aus den Vorratsbehältern unterschiedliche, in ihrer Summe eine bestimmte unveränderliche Wassermenge ergebende Wasser-Teilmengen abgerufen werden können.

5. Wasserenthärter nach einem der Ansprüche 1 oder 4, dadurch gekennzeichnet, daß eine Mischvorrichtung (9) vorgesehen ist, in welcher die der einen Wasser-Teilmenge entsprechende Solemenge und die andere Wasser-Teilmenge zusammengeführt und als Gemisch in den Tauscherbehälter (1) eingeleitet werden.

6. Wasserenthärter nach Anspruch 5, dadurch gekennzeichnet, daß die Mischvorrichtung (9) in den Salzbehälter (2a) integriert ist.

7. Wasserenthärter nach Anspruch 5, dadurch gekennzeichnet, daß das Magnetventil (10), welches den Mischvorgang steuert, in Strömungsrichtung nach der Mischvorrichtung (9) angeordnet ist.

8. Wasserenthärter nach einem der Ansprüche 1 oder 4, dadurch gekennzeichnet, daß zur Steuerung des Mischvorganges in die beiden von dem Vorratsbehälter (14, 3a) oder den Vorratsbehältern kommenden Kanäle (7, 8) zwei einfache Magnetventile eingeschaltet sind oder ein 4/2-Wege-Magnetventil eingeschaltet ist.

9. Wasserenthärter nach einem der Ansprüche 1 oder 4, dadurch gekennzeichnet, daß der Strömungswiderstand des unmittelbar in den Tauscherbehälter (1) führenden Kanals (7) im Verhältnis zum Strömungswiderstand des anderen Kanals (8) und des Salzbehälters (2) so groß bemessen ist, daß die entsprechende Wasser-Teilmenge im wesentlichen nach der Solemenge in den Tauscherbehälter (1) einfließt.

10. Wasserenthärter nach Anspruch 1, dadurch gekennzeichnet, daß zur Anpassung an das Volumen des verwendeten Tauscherbehälters die gesamte bevorratete Wassermenge einstellbar ist.

11. Wasserenthärter nach Anspruch 2, dadurch gekennzeichnet, daß das Leitventil (25) ein Drehventil ist.

12. Wasserenthärter nach Anspruch 11, dadurch gekennzeichnet, daß das Leitventil (25) in den mehrkammerigen Vorratsbehälter (3a) integriert ist.

13. Wasserenthärter nach Anspruch 11, dadurch gekennzeichnet, daß das Leitventil (25) eine Lochscheibe (30) mit den einzelnen Kammern (a bis f) und Kanälen (7, 8) zugeordneten, kreisförmig angeordneten Löchern (33 bis 40) aufweist und daß an der Lochscheibe ein koaxial gelagertes Drehteil (31) anliegt, das an seiner der Lochscheibe (30) zugewandten Seite zwei bogenförmige Vertiefungen (42, 43) hat, welche je nach der Winkelstellung des Drehteils (31) die Löcher in wechselnder Gruppierung miteinander verbinden.

14. Wasserenthärter nach Anspruch 13, dadurch gekennzeichnet, daß die Vertiefungen (42, 43) von einem Dichtring (52) umrandet sind.

15. Wasserenthärter nach Anspruch 13, dadurch gekennzeichnet, daß das Drehteil (31) mit einem axialen Vorsprung die Lochscheibe (30) durchsetzt und eine ihn umgebende wendelförmige Druckfeder (57) zwischen der Lochscheibe (30) und einer Verbreiterung am Ende des Vorsprungs eingespannt ist.

16. Wasserenthärter nach Anspruch 15, dadurch gekennzeichnet, daß der Vorsprung aus einzelnen Fingern (56) besteht.

## Claims

1. Water softener system for domestic dish washing machines with an exchanger container (1) containing a granular ion exchanger medium, a salt container (2) and a storage container (3), which is arranged above the salt container and discharges a quantity of water into the salt container for regeneration, brine thereby passing from the salt container (2) into the exchanger container (1), characterised in that the entire quantity of water stored may be divided into two part-quantities in a selectable ratio, and that one part-quantity passes via the salt container (2) and the other passes directly into the exchanger container (1).

2. Water softener system according to Claim 1, characterised in that the storage container (14, 3a) comprises a plurality of individual chambers (15; a to f), which through a control valve (20; 25) with two outlets, which are connected via separate ducts (7, 8) to the exchanger container (1) or the salt container (2), may be selectively fed to one of these outlets respectively.

3. Water softener system according to Claim 1, characterised in that the storage container (3) comprises two chambers (4, 5) with their own outlets, which are separated from one another by a moveable wall (6).

4. Water softener system for domestic dish washing machines with an exchanger container containing a granular ion exchanger medium, a salt container and a storage container, which is arranged above the salt container and discharges a quantity of water into the salt container for regeneration, brine thereby passing from the salt container into the exchanger container, characterised in that two storage containers are each provided with one outlet, that one outlet is connected to the exchanger container via the salt container and the other is connected directly thereto, and that different quantities of water amounting in total to a specific invariable quantity of water can be called from the storage containers.

5. Water softener system according to one of Claims 1 or 4, characterised in that a mixing device (9) is provided, in which the quantity of brine corresponding to one part-quantity of water and the other part-quantity of water are brought together and fed into the exchanger container (1) as a mixture.

6. Water softener system according to Claim 5, characterised in that the mixing device (9) is integrated into the salt container (2a).

7. Water softener system according to Claim 5, characterised in that the solenoid valve (10), which controls the mixing process, is arranged after the mixing device (9) in the direction of flow.

8. Water softener system according to one of Claims 1 or 4, characterised in that two single solenoid valves or a 4/2-way solenoid valve are connected to control the mixing process into the two ducts (7, 8) extending from the storage container (14, 3a) or the storage containers.

9. Water softener system according to one of Claims 1 or 4, characterised in that the flow resistance of the duct (7) leading directly into the exchanger container (1) is so large in dimension in relation to the flow resistance of the other duct (8) and the salt container (2) that the corresponding part-quantity of water flows into the exchanger container (1) essentially after the quantity of brine.

10. Water softener system according to Claim 1, characterised in that the entire quantity of water stored is adjustable for adaptation to the volume of the exchanger container (1) used.

11. Water softener system according to Claim 2, characterised in that the control valve (25) is a turning valve.

12. Water softener system according to Claim 11, characterised in that the control valve (25) is integrated into the multiple-chamber storage container (3a).

13. Water softener system according to Claim 11, characterised in that the control valve (25) has a perforated disc (30) with holes (33 to 40) arranged in a circle allocated to the individual chambers (a to f) and ducts (7, 8), and that a coaxially disposed rotary part (31) abuts against the perforated disc, said rotary part having on its side facing the perforated disc (30) two arc-shaped depressions (42, 43) which connect the holes in varying group arrangements to one another, depending on the angular position of the rotary part (31).

14. Water softener system according to Claim 13, characterised in that the depressions (42, 43) are bordered by a sealing ring (52).

15. Water softener system according to Claim 13, characterised in that the rotary part (31) passes through the perforated disc (30) with an axial projection, and a spiral compression spring (57) surrounding it is clamped between the perforated disc (30) and a widened portion at the end of the projection.

16. Water softener system according to Claim 15, characterised in that the projection comprises individual fingers (56).

## Revendications

1. Adoucisseur d'eau pour des machines à laver la vaisselle domestiques, comportant un récipient échangeur (1), qui contient une masse en grains d'échange d'ions, un récipient de sel (2) et un réservoir (3) agencé au-dessus du récipient de sel, qui délivre une quantité d'eau dans le récipient de sel pour la régénération, la saumure débordant du récipient de sel (2) dans le récipient échangeur (1),
caractérisé en ce que la quantité totale d'eau en réserve peut être répartie, dans un rapport qui peut être choisi, en deux quantités partielles, et en ce qu'une quantité partielle parvient via le récipient de sel (2), et l'autre directement, dans le récipient échangeur (1).

2. Adoucisseur d'eau selon la revendication 1,
caractérisé en ce que le réservoir (14,3a) est constitué d'une pluralité de chambres individuelles (15 ; a à f), qui, par l'intermédiaire d'une vanne de guidage (20 ;25) à deux sorties, qui sont reliées, par l'intermédiaire de canaux séparés (7,8), au récipient échangeur (1) ou au récipient de sel (2), peuvent être raccordées, au choix, à chacune de ces sorties.

3. Adoucisseur d'eau selon la revendication 1,
caractérisé en ce que le réservoir (3) est constitué de deux chambres (4,5) avec des sorties propres, qui sont séparées l'une de l'autre par une paroi mobile (6).

4. Adoucisseur d'eau pour des machines à laver la vaisselle domestiques, comportant un récipient échangeur, qui contient une masse en grains d'échange d'ions, un récipient de sel et un réservoir agencé au-dessus du récipient de sel, qui délivre une quantité d'eau dans le récipient de sel pour la régénération, la saumure débordant du récipient de sel dans le récipient échangeur,
caractérisé en ce que deux réservoirs sont prévus avec chacun une sortie, en ce qu'une sortie est reliée via le récipient de sel, et l'autre directement, au récipient échangeur, et en ce que des quantités partielles d'eau différentes, dont la somme résulte en une quantité d'eau déterminée constante, peuvent être retirées des réservoirs.

5. Adoucisseur d'eau selon une des revendications 1 ou 4,
caractérisé en ce qu'un dispositif de mélangeage (9) est prévu, dans lequel la quantité de saumure correspondant à une quantité partielle d'eau et l'autre quantité partielle d'eau sont rassemblées et introduites, comme mélange, dans le récipient échangeur (1).

6. Adoucisseur d'eau selon la revendication 5,
caractérisé en ce que le dispositif de mélangeage (9) est intégré dans le récipient de sel (2a).

7. Adoucisseur d'eau selon la revendication 5,
caractérisé en ce que la soupape magnétique (10), qui commande le processus de mélangeage, est agencée après le dispositif de mélangeage (9) dans le sens de l'écoulement.

8. Adoucisseur d'eau selon une des revendications 1 ou 4,
caractérisé en ce que, pour commander le processus de mélangeage dans les deux canaux (7,8) provenant du réservoir (14,3a) ou des réservoirs, il est prévu deux soupapes magnétiques simples ou une soupape magnétique de distribution 4/2.

9. Adoucisseur d'eau selon une des revendications 1 ou 4,
caractérisé en ce que la résistance à l'écoulement du canal (7) menant directement dans le récipient échangeur (1) par rapport à la résistance à l'écoulement de l'autre canal (8) et du récipient de sel (2) est telle que la quantité partielle d'eau correspondante entre dans le récipient échangeur (1) généralement après la quantité de saumure.

10. Adoucisseur d'eau selon la revendication 1,
caractérisé en ce que la quantité d'eau totale en réserve peut être réglée pour l'adaptation au volume du récipient échangeur utilisé.

11. Adoucisseur d'eau selon la revendication 2,
caractérisé en ce que la vanne de guidage (25) est une vanne rotative.

12. Adoucisseur d'eau selon la revendication 11,
caractérisé en ce que la vanne de guidage (25) est intégrée dans le réservoir (3a) à plusieurs chambres.

13. Adoucisseur d'eau selon la revendication 11,
caractérisé en ce que la vanne de guidage (25) présente un disque perforé (30) ayant des trous (33 à 40) agencés de façon circulaire et associés aux chambres individuelles (a à f) et aux canaux (7,8), et en ce qu'une pièce rotative (31) montée de façon coaxiale est adjacente au disque perforé, laquelle pièce présente, sur sa face en regard du disque perforé (30), deux évidements (42,43) arqués, qui, selon la position angulaire de la pièce rotative (31), relient ensemble les trous en les groupant de façon variable.

14. Adoucisseur d'eau selon la revendication 13,
caractérisé en ce que les évidements (42,43) sont bordés par une bague d'étanchéité (52).

15. Adoucisseur d'eau selon la revendication 13,
caractérisé en ce que la pièce rotative (31) traverse le disque perforé (30) par une saillie axiale, et un ressort de pression (57) hélicoïdal l'entourant est encastré entre le disque perforé (30) et un élargissement à l'extrémité de la saillie.

16. Adoucisseur d'eau selon la revendication 15,
caractérisé en ce que la saillie est constituée de doigts individuels (56).
